(19) Europäisches Patentamt

European Patent Office

Office européen des brevets

(11) **EP 1 408 478 A1**

(12) **EUROPEAN PATENT APPLICATION**
published in accordance with Art. 158(3) EPC

(43) Date of publication:
**14.04.2004 Bulletin 2004/16**

(21) Application number: **02722718.0**

(22) Date of filing: **22.04.2002**

(51) Int Cl.[7]: **G09G 3/20**, G09G 3/34,
G03B 21/00, G03B 21/14,
G03B 33/12, H04N 5/66,
H04N 9/12

(86) International application number:
**PCT/JP2002/003975**

(87) International publication number:
**WO 2003/003337 (09.01.2003 Gazette 2003/02)**

(84) Designated Contracting States:
**AT BE CH CY DE DK ES FI FR GB GR IE IT LI LU
MC NL PT SE TR**

(30) Priority: **27.06.2001 JP 2001195523**

(71) Applicant: **MATSUSHITA ELECTRIC INDUSTRIAL
CO., LTD.
Kadoma-shi, Osaka 571-8501 (JP)**

(72) Inventor: **SATO, Hiroaki
Kawanishi-shi, Hyogo 666-0026 (JP)**

(74) Representative: **Grünecker, Kinkeldey,
Stockmair & Schwanhäusser Anwaltssozietät
Maximilianstrasse 58
80538 München (DE)**

(54) **COLOR IMAGE DISPLAYING METHOD AND APPARATUS**

(57)    A display method of a color image display apparatus comprising:

an image display panel comprising a multiplicity of pixels capable of modulating incident light in accordance with signals of red, green and blue;
an optical system making light beams of red, green and blue incident on said image display panel and causing the light beams to continuously move on said image display panel; and
an image display panel driving circuit PWM-driving, in accordance with a color of light incident on a given part of said image display panel, a pixel of the part with a signal corresponding to the color of the incident light,

wherein a predetermined value of an incident light quantity and timing when the predetermined value is obtained are previously obtained, and timing of each display gradation bit of PWM driving is set so that display brightness of each display gradation bit n of PWM driving is a product of the predetermined value and $2^n$, and
wherein image display is performed by using the set timing.

Fig. 1

EP 1 408 478 A1

## Description

TECHNICAL FIELD

The present invention relates to an image display apparatus or to a projection-type image display apparatus, performing color display with one light bulb serving as modulating means.

BACKGROUND ART

Examples of conventional methods of performing full-color image display include a PWM driving method, and recently, the PWM driving method is widely used for dot-matrix displays such as plasma displays.

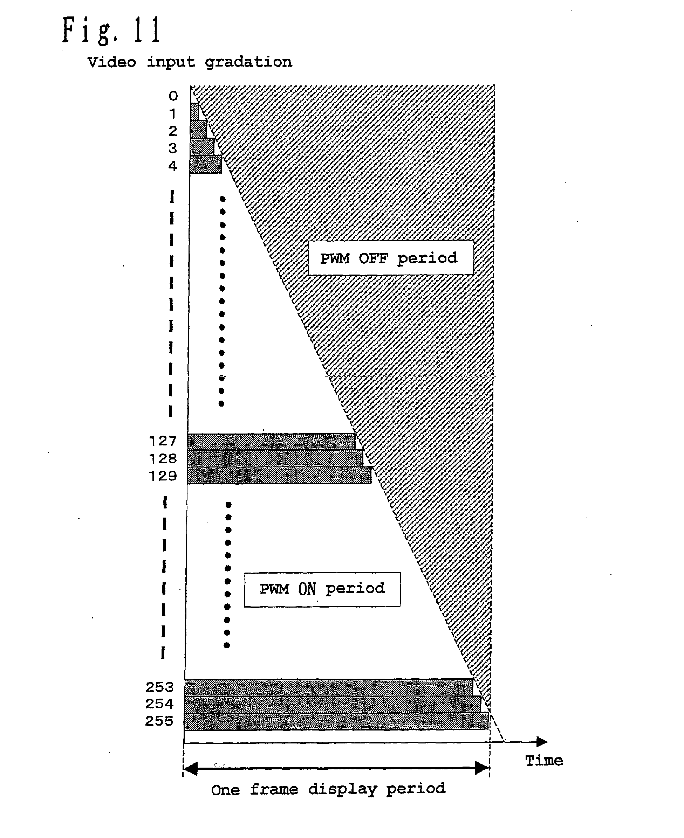

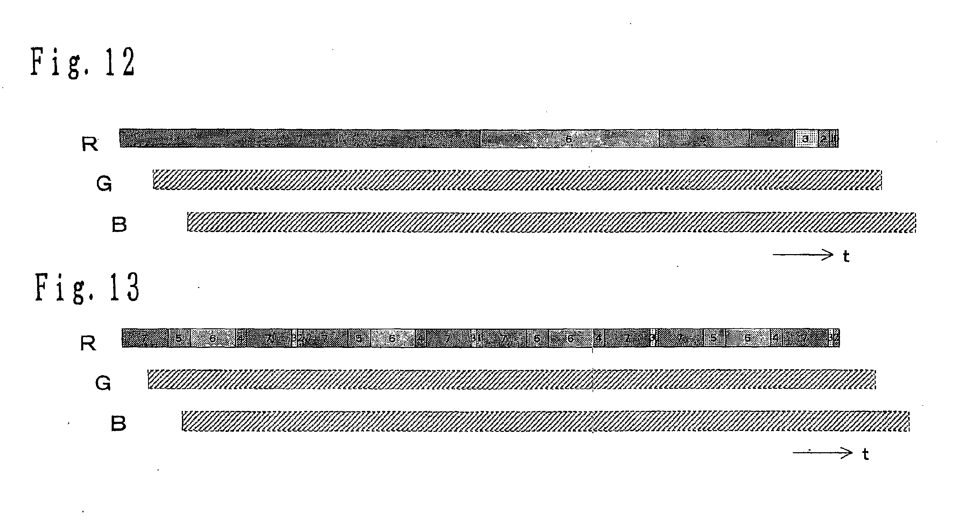

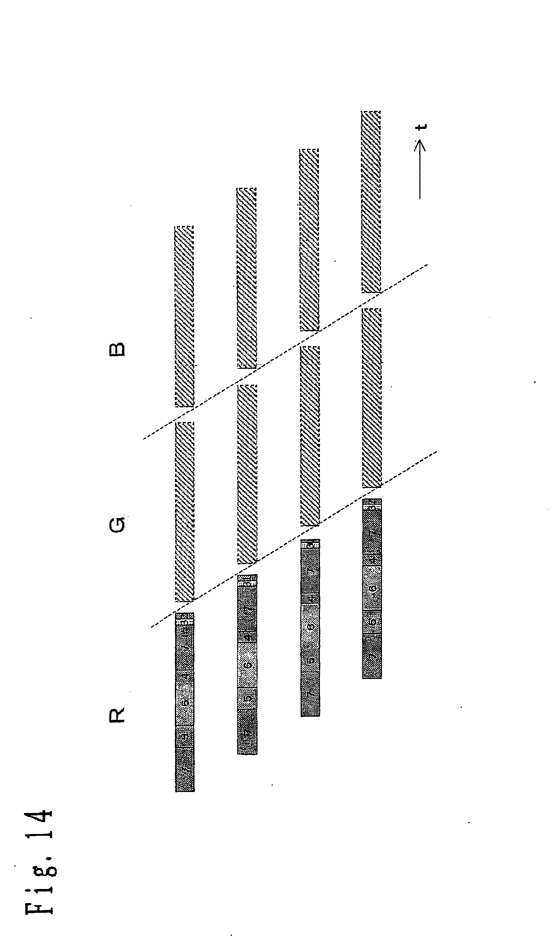

PWM driving display is a method which forms light and shade display by an amplitude-time axis conversion processing of turning on the display on the display device during a period proportional to the amplitude of the RGB video signal as shown in FIG. 11. FIG. 12 shows the most basic PWM pattern when the gradation of the RGB video signal is 8 bits. In this pattern, the display is turned on and off for the time proportional to each of the RGB gradation bits. However, a problem of this method is that since the part where the display is on tends to concentrate on a part of the period, a flicker appears or a false contour appears in the case of a moving image. To solve the problem of FIG. 12, the PWM pattern of FIG. 13 is generally used. In FIG. 13, each gradation bit is divided into fine segments to thereby prevent a specific one gradation from concentrating on a part of the period, so that the problem of FIG. 12 is solved. However, the patterns of FIGs. 12 and 13 have another common problem. The problem is that since the PWM patterns of RGB are driven by time division, color separation occurs when a moving image is displayed. To solve this problem, the PWM pattern of FIG. 14 is used. In the PWM pattern of FIG. 14, the PWM pattern of each of the colors R, G and B is divided into several patterns, and the divisional patterns are rearranged such as RGBRGB--. The problem of color separation is eliminated by increasing the number of divisions so that the range detectable by the human eye is exceeded.

In a light bulb display having an optical system that makes light beams of red, green and blue incident on an image display panel and causes the light beams to continuously move on the image display panel, and performing full-color image display by PWM-driving the image display panel at a timing of light passage, even if the light source light is condensed into square light having a uniform light quantity distribution by using a so-called integrator, a difference in brightness is caused between the central part and the peripheral part of the optical axis because of the cosine fourth-power law when the light passes through a lens system comprising a color separating optical system and a scanning optical system. Therefore, the scanning light passing on the image display panel is not constant in brightness in time and space. The brightness difference in space appears as the brightness difference between each position of the image plane, and this difference is not particularly a problem because it is generally solved by brightness modulation of the video signal. However, the brightness difference in time causes a brightness difference between gradations, that is, discontinuity of display light quantity changes with respect to gradation changes, because the PWM driving which is a processing in a direction of time is performed on the image display panel.

Moreover, in the above-mentioned light bulb display, since the PWM driving method is used, gradation expression is limited by the number of quantization bits of the image. Therefore, when the number of gradations is insufficient, an unsmooth image with a false contour is formed.

Moreover, in the light bulb display, since the brightness of the border between the scanning light of each color scanning the image display panel decreases, when the colors are prevented from overlapping, the quantity of light that can be used decreases and consequently decreases the display brightness.

DISCLOSURE OF INVENTION

In view of the above-mentioned problem of the conventional light bulb display, an object of the present invention is to provide a method and an apparatus of displaying a color image 1) capable of eliminating the discontinuity of display brightness changes with respect to gradation changes, 2) capable of eliminating the unsmoothness of the image or the generation of the false contour caused by the insufficient number of quantization bits of the image, or 3) capable of achieving both an improvement in display brightness and expansion of the number of quantization bits of the image.

To solve the above-mentioned problem, the present invention uses the following method and means:

For the discontinuity of display light quantity changes with respect to gradation changes, when there are variations with time in the quantity of the applied light of each color that is incident on the image display panel and moved, or even when there are no such variations, a predetermined value of the incident light quantity and timing when the predetermined time is obtained are obtained, timing of each display gradation bit of PWM driving is set so that the display brightness of each display gradation bit n of PWM driving is the product of the predetermined value and $2^n$, and the brightness discontinuity between display gradations is eliminated, whereby color image display is performed.

Next, for the problem of the insufficient number of display gradations, a method and means are used such that when there are variations with time in the quantity of the light of each color that is incident on the image display panel and moved, or even when there are no such variations, a PWM pattern is added at a timing when a light quantity half the lowest expression bit of PWM driving is possessed.

Moreover, for the reduction in display brightness, a period where adjoining two colors of the light incident on the image display panel overlap each other is provided, and a processing to drive a brightness signal component during the period when the two colors overlap each other is also performed.

The present invention is not limited to the above-described means, and has the following structure:

A first invention of the present invention (corresponding to Claim 1) is a display method of a color image display apparatus comprising:

an image display panel having a multiplicity of pixels capable of modulating incident light in accordance with signals of red, green and blue;
an optical system making light beams of red, green and blue incident on said image display panel and causing the light beams to continuously move on said image display panel; and
an image display panel driving circuit PWM-driving, in accordance with a color of light incident on a given part of said image display panel, a pixel of the given part with a signal corresponding to the color of the incident light,

wherein a predetermined value of an incident light quantity and timing when the predetermined value is obtained are previously obtained, and timing of each display gradation bit of PWM driving is set so that display brightness of each display gradation bit n of PWM driving is a product of the predetermined value and $2^n$, and

wherein image display is performed by using the set timing.

A second invention of the present invention (corresponding to Claim 2) is a color image display method according to the first invention,

wherein said predetermined value of the incident light quantity is an average value of brightness of scanning light $\times$ unit time.

A third invention of the present invention (corresponding to Claim 3) is a color image display apparatus comprising:

an image display panel having a multiplicity of pixels capable of modulating incident light in accordance with signals of red, green and blue;
an optical system making light beams of red, green and blue incident on said image display panel and causing the light beams to continuously move on said image display panel; and
an image display panel driving circuit PWM-driving, in accordance with a color of light incident on a given part of said image display panel, a pixel of the given part with a signal corresponding to the color of the incident light,

wherein a predetermined value of an incident light quantity and timing when the predetermined value is obtained are previously obtained, and timing of each display gradation bit of PWM driving is set so that display brightness of each display gradation bit n of PWM driving is a product of the predetermined value and $2^n$, and

wherein image display is performed by using the set timing.

A fourth invention of the present invention (corresponding to Claim 4) is a display method of a color image display apparatus comprising:

an image display panel having a multiplicity of pixels capable of modulating incident light in accordance with signals of red, green and blue;
an optical system making light beams of red, green and blue incident on said image display panel and causing the light beams to continuously move on said image display panel; and
an image display panel driving circuit PWM-driving, in accordance with a color of light incident on a given part of said image display panel, a pixel of the given part with a signal corresponding to the color of the incident light,

wherein a PWM pattern is added at a timing when half of a light quantity of the lowest expression bit of PWM driving is possessed, thereby increasing the number of display gradation bits.

A fifth invention of the present invenito (corresponding to Claim 5) is a color image display apparatus comprising:

an image display panel having a multiplicity of pixels capable of modulating incident light in accordance with signals of red, green and blue;
an optical system making light beams of red, green and blue incident on said image display panel and causing the light beams to continuously move on said image display panel; and
an image display panel driving circuit PWM-driving, in accordance with a color of light incident on a given part of said image display panel, a pixel of the given part with a signal corresponding to the color of the incident light,

wherein a PWM pattern is added at a timing when a light quantity half the lowest expression bit of PWM driving is possessed, thereby increasing the number of display gradation bits.

A sixth invention of the present invention (corresponding to Claim 6) is a display method of a color image display apparatus comprising:

an image display panel having a multiplicity of pixels capable of modulating incident light in accordance with signals of red, green and blue;
an optical system making light beams of red, green and blue incident on said image display panel and causing the light beams to continuously move on said image display panel; and

an image display panel driving circuit PWM-driving, in accordance with a color of light incident on a given part of said image display panel, a pixel of the given part with a signal corresponding to the color of the incident light,

wherein in said optical system, for the incident light on said image display panel, a period when adjoining two colors overlap each other is provided, and

wherein said image display panel driving circuit drives a brightness signal component during the period when the two signals overlap each other, and adds a PWM pattern at a timing when half of a light quantity of the lowest expression bit of PWM driving is possessed, thereby increasing the number of display gradation bits.

A seventh invention of the present invention (corresponding to Claim 7) is a color image display apparatus comprising:

an image display panel having a multiplicity of pixels capable of modulating incident light in accordance with signals of red, green and blue;

an optical system making light beams of red, green and blue incident on said image display panel and causing the light beams to continuously move on said image display panel; and

an image display panel driving circuit PWM-driving, in accordance with a color of light incident on a given part of said image display panel, a pixel of the given part with a signal corresponding to the color of the incident light,

wherein in said optical system, for the incident light on said image display panel, a period when adjoining two colors overlap each other is provided, and

wherein said image display panel driving circuit drives a brightness signal component during the period when the two signals overlap each other, and adds a PWM pattern at a timing when a light quantity half the lowest expression bit of PWM driving is possessed, thereby increasing the number of display gradation bits.

BRIEF DESCRIPTION OF DRAWINGS

FIG. 1 is a structural view of a first embodiment of the present invention;
FIG. 2 is a structural view of the first embodiment of the present invention;
FIG. 3 is a view of assistance in explaining the conventional problem;
FIG. 4 is a view of assistance in explaining the conventional problem;
FIG. 5 is a view of assistance in explaining the conventional problem;
FIG. 6 is a view of assistance in explaining the first embodiment of the present invention;
FIG. 7 is a PWM pattern view of the first embodiment of the present invention;
FIG. 8 is a PWM pattern view of the first embodiment of the present invention;
FIG. 9 is a structural view of a second embodiment of the present invention;
FIG. 10 is a structural view of the second embodiment of the present invention;
FIG. 11 is a view of assistance in explaining the principle of the PWM driving;
FIG. 12 is a view of assistance in explaining PWM driving pattern formation;
FIG. 13 is a view of assistance in explaining PWM driving pattern formation;
FIG. 14 is a view of assistance in explaining PWM driving pattern;
FIG. 15 is a structural view of a concrete example of light condensing means;
FIG. 16 is a structural view of a concrete example of scanning means;
FIG. 17 is a structural view of a concrete example of a PWM driving processing circuit;
FIG. 18 is a structural view of a concrete example of an image display panel;
FIG. 19 is a structural view of the conventional PWN pattern;
FIG. 20 shows the conventional PWN pattern;
FIG. 21 shows the conventional PWN pattern; and
FIG. 22 shows the conventional PWN pattern.

(Explanation of Reference Numerals)

1 PWM driving processing circuit
2 Buffer memory
3 PWM output circuit
4 PWM output control circuit
6 Image display panel
7 Scanning lens
8 Scanning means
9 Scanning optical system
10 Color separating optical system
11 Light condensing means
12 Light source portion
13 Divisional bitplane (in the case of eight bits)
14 Conventional PWM pattern
15 PWM pattern of the present invention
16, 17, 18 Scanning light bands
30 PWM gradation expansion processing circuit
31 Buffer memory
32 Pulse output circuit
33 Timing control circuit
34 Multiplexer
35 Normal PWM driving period

36 Bit expansion PWM driving period
39, 40 Data selectors
50 Brightness signal calculation output circuit

BEST MODE FOR CARRYING OUT THE INVENTION

(First Embodiment)

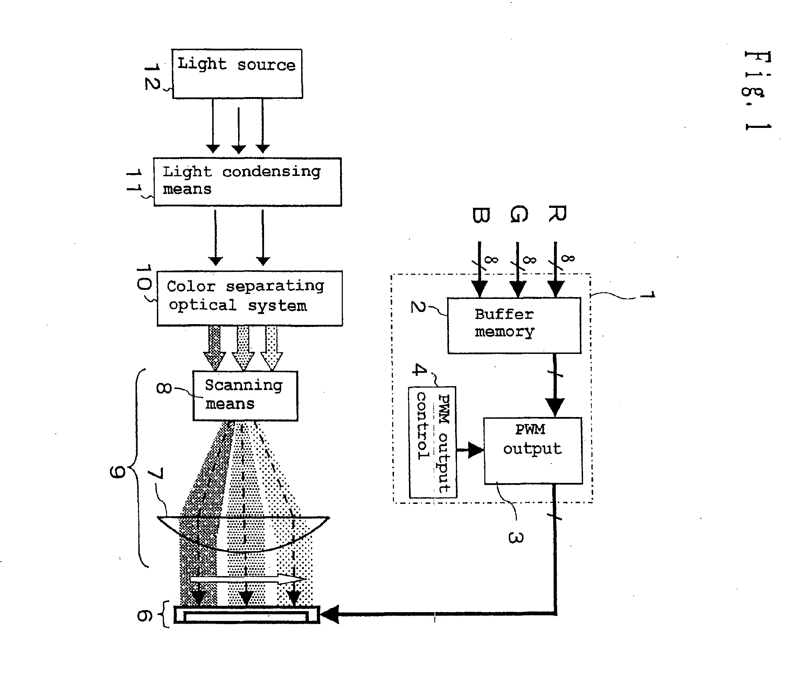

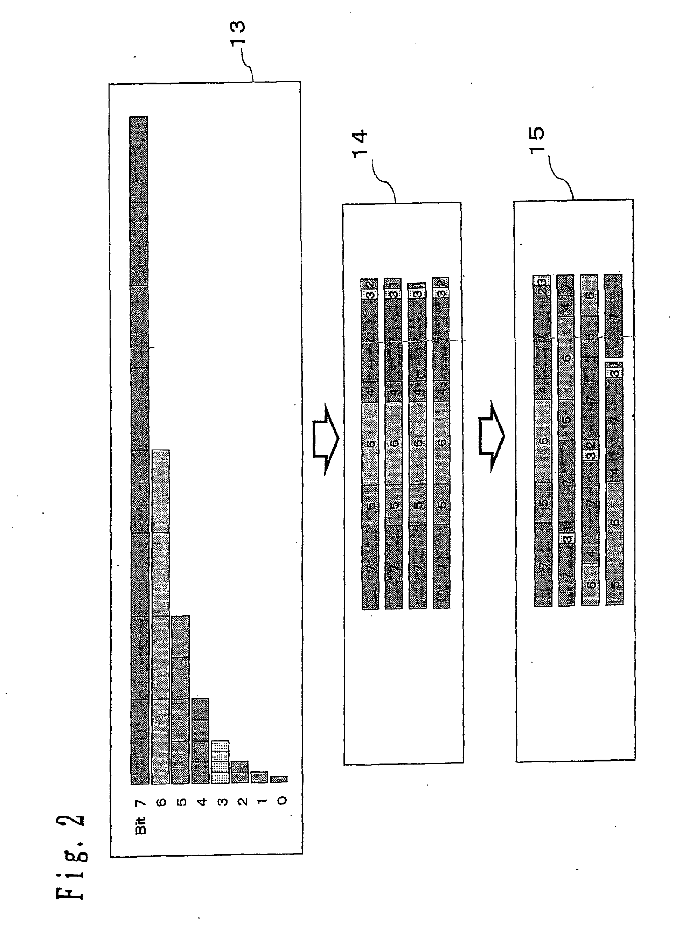

The first embodiment solves the problem that display light quantity changes are discontinuous with respect to gradation changes. FIGs. 1 and 2 are structural views of the first embodiment. FIG. 1 shows the general structure. FIG. 2 shows the contents of the signal processing. The structure of FIG. 1 comprises a light source portion 12, light condensing means 11, a color separating optical system 10, an optical system comprising a scanning optical system 9 comprising scanning means 8 and a scanning lens 7, a transmission-type image display panel 6, and a PWM driving processing circuit 1 driving the image display panel 6.

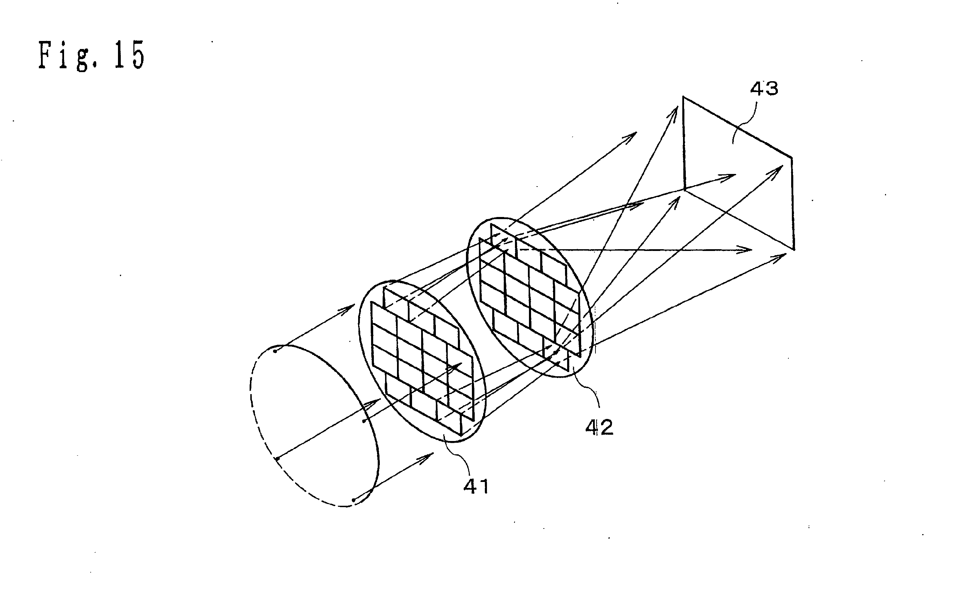

First, the basic operation will be described. Light emanating from the light source portion 12 is condensed by the light condensing means 11, and light of the same configuration as that of the illumination light applied to the succeeding image display panel 6 is output. The light condensing means 11 is one that is generally called an integrator, and concrete examples thereof include one shown in FIG. 15. The example of FIG. 15 comprises two stages of multi-lens arrays, each of which array has the same number of lens elements. The light incident on each lens element of a first-stage array 41 is condensed on the corresponding lens element of a second-stage array 42 and is uniformly applied onto the entire area of an image formed surface 43 to thereby uniformize the light intensity at each position of the succeeding image forming portion.

The output light of the light condensing means 11 is separated into square light beams of R, G and B by the color separating optical system 10. Color separation is generally performed by using a color filter. The output light of the color separating optical system 10 is input next to the scanning means 8, and the square light beams of R, G and B are scanning-output.

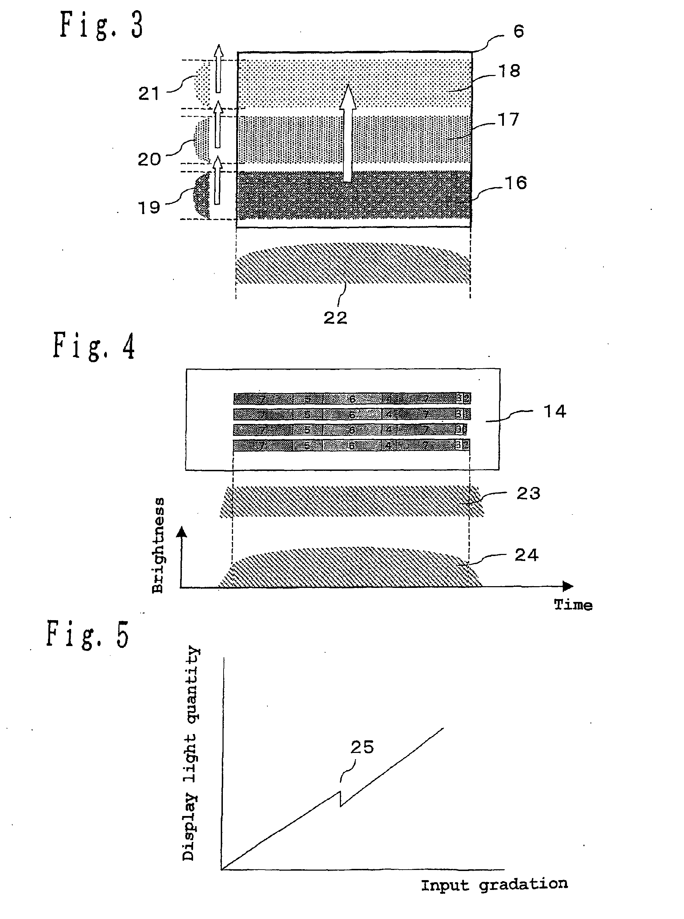

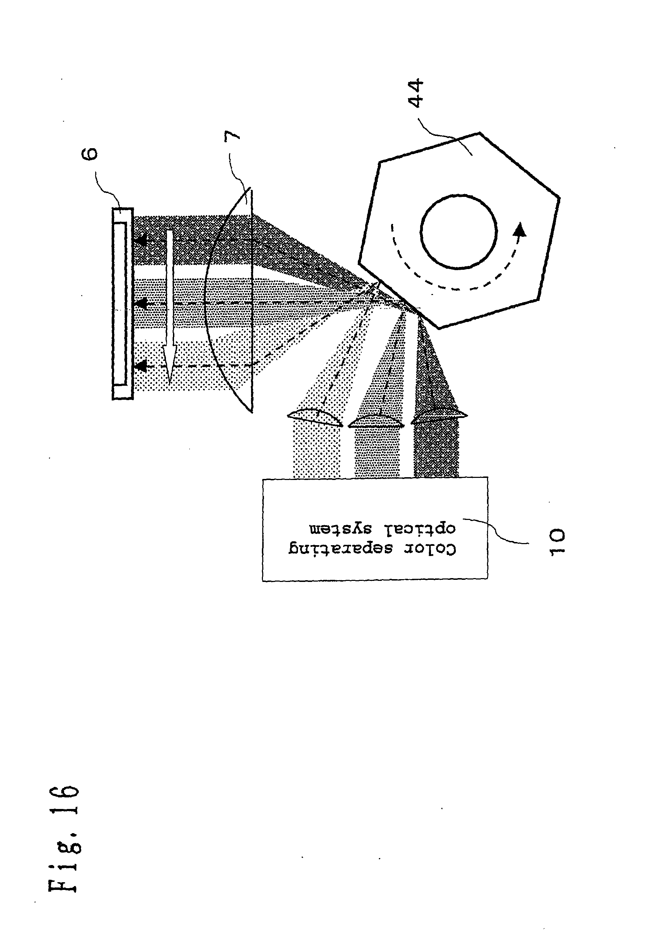

The scanning means 8 can be implemented, for example, by a method using a polygonal mirror shown in FIG. 16. The scanning output light is made incident on the scanning lens 7. The scanning lens 7 comprises a so-called fθ lens having the property of forming an image in a position proportional to the angle of incidence. Consequently, square light of each color as shown in FIG. 3 is made incident on the image display panel 6.

On the other hand, to the image display panel 6, a PWM pattern formed by a conversion from an RGB signal is input in synchronism with the square scanning light of each color. Consequently, an image is formed by light transmitted by the image display panel 6.

Although square light having uniform intensity is output from the light condensing means 11, since various kinds of lens elements are present in the succeeding optical system, as shown in FIG. 3, brightness ununiformnesses 19, 20 and 21 in the scanning direction of the light of each of R, G and B and a brightness ununiformness 22 in a direction vertical to optical scanning are caused in the stage of input to the image display panel 6.

The brightness ununiformness 22 appears as brightness shading in a horizontal direction on the image plane. An influence by the scanning light beams 19, 20 and 21 of R, G and B having a brightness ununiformness is shown in FIG. 4. The pattern shown at 14 of FIG. 4 is the same as the PWM driving pattern of the conventional example shown in FIG. 14. Although the gradation bits of PWM are uniform in brightness when there is no brightness ununiformness (23), an imbalance occurs in the brightness of the gradation bits when there is brightness ununiformness (24).

For example, compared to a gradation bit 6 driven at a timing when the intensity of the scanning light is highest, a gradation bit 7 driven in a part where the intensity of the scanning light is low is relatively smaller in light quantity. Consequently, as shown in FIG. 5, discontinuity of the display light quantity, that is, discontinuity 25 of the gradation linearity is caused in a part where the gradation goes up to the gradation 7.

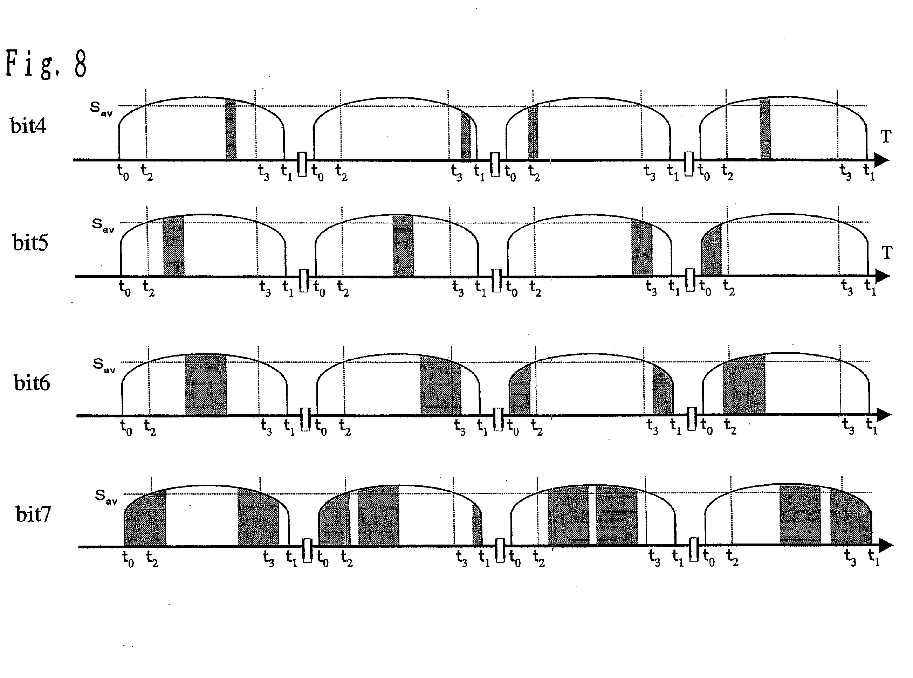

Hereinafter, first, a PWM driving processing method of eliminating the discontinuity of the gradation linearity will be described with reference to FIGs. 2, 6, 7 and 8. A case where the PWM driving pattern based on the one shown at 14 of FIG. 4 is modified will be described as an example.

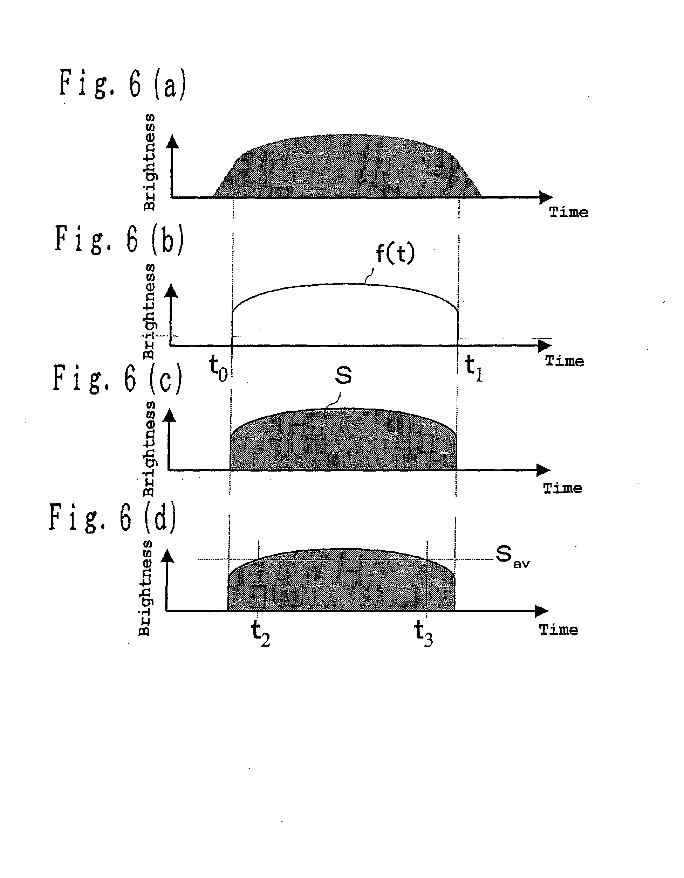

First, the definitions of parameters associated with the processing are shown in FIG. 6. (a) of FIG. 6 shows the relationship between the brightness of the scanning light and time. The end parts of the scanning light where the light quantity is small are not used, and the range from the time t0 to the time t1 is used for driving as shown in (b) of FIG. 6. The brightness of the scanning light at the time t is represented by a function f(t). Next, when the usable light quantity is S, S is represented by the area of (c) of FIG. 6 (Expression 1). The average value Sav of the brightness is expressed by (Expression 2).

(Expression 1)

$$S = \int_{t_0}^{t_1} f(t)\,dt$$

(Expression 2)

$$S_{av} = \frac{S}{t_1 - t_0} : \text{Average value}$$

The timings when the brightness of the scanning light becomes equal to the average value Sav of the brightness, that is, the solutions to (Expression 3) are assumed to be t2 and t3.

(Expression 3)

$$S_{av} = f(t_2)$$

$$S_{av} = f(t_3)$$

Next, a method of arranging the PWM pattern will be described with reference to FIGs. 4 and 5. An example which is an improvement of the method of the type of FIG. 14 will be described.

The smallest unit of the light quantity in the PWM pattern is represented by the average value Sav of the brightness of the scanning light × unit time, and the unit light quantity is a light quantity corresponding to a bit φ shown below, the above-mentioned predetermined value.

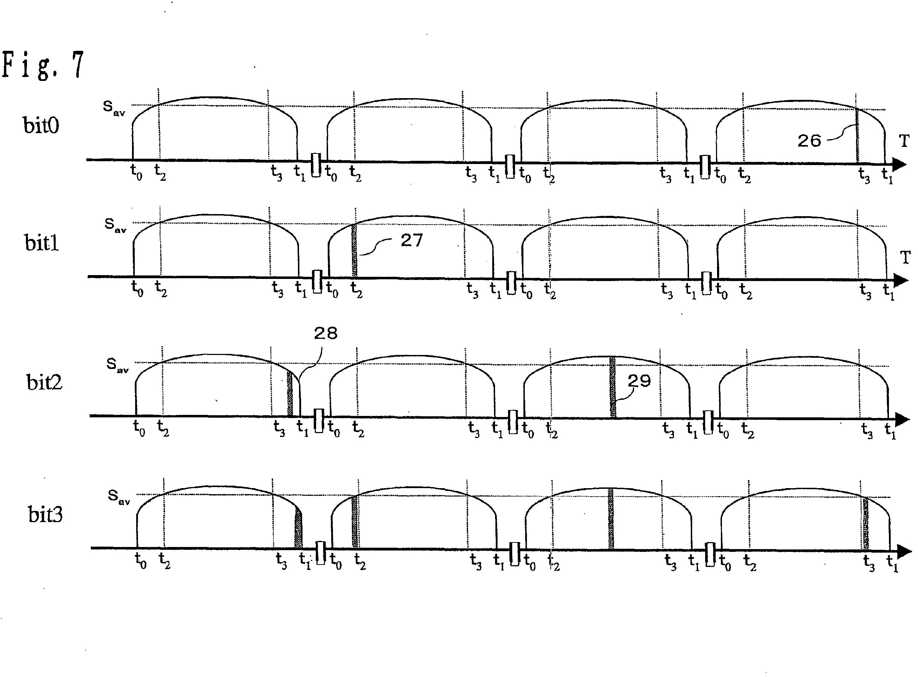

A bit 0 (the lowest bit) is a timing 26 in FIG. 7, a bit 1 is a timing 27 in FIG. 7, and these are disposed in the neighborhood of the timings t2 and t3 when the average value of the brightness of the scanning light is obtained. Needless to say, the period width of the bit 1 is twice that of the bit 0.

A bit 2 is disposed so that the difference between the sum of bit planes 28 and 29 and the value four times the light quantity of the bit φ is smallest. For the gradations of not less than the bit 3, the bitplane disposition is decided in a similar manner.

That is, the bitplane disposition is decided so that when a gradation n is displayed, the difference between the brightness determined by the bitplane disposition and the light quantity of the bit φ × (2 raised to the n-th power) is smallest.

By the above-described method, the PWM pattern arrangement is as shown at 15 in FIG. 2. Here, 14 in FIG. 2 is 14 in FIG. 4, that is, the PWM pattern arrangement of FIG. 14 as mentioned above. By the above-described method, the display light quantity difference between each gradation is eliminated, so that the gradation linearity is kept excellent.

Next, a concrete example of the circuit processing for embodying the above-described processing method will be described with reference to FIGs. 1, 2, 17 and 18.

In FIG. 1, a PWM driving processing circuit 1 comprises a buffer memory 2, a PWM output circuit 3 and a PWM output control circuit 4. To convert video signals into a PWM pattern in real time, it is necessary to perform a process such that the video signals are stored by a buffer memory of at least one frame, successively read out from the memory and converted into a PWM pattern, and the image display panel 6 is driven.

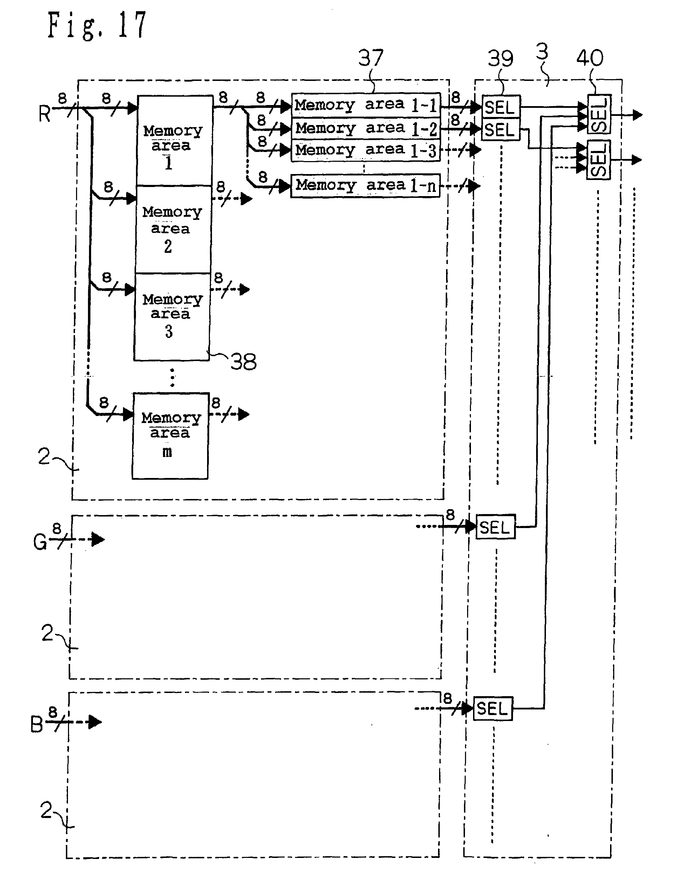

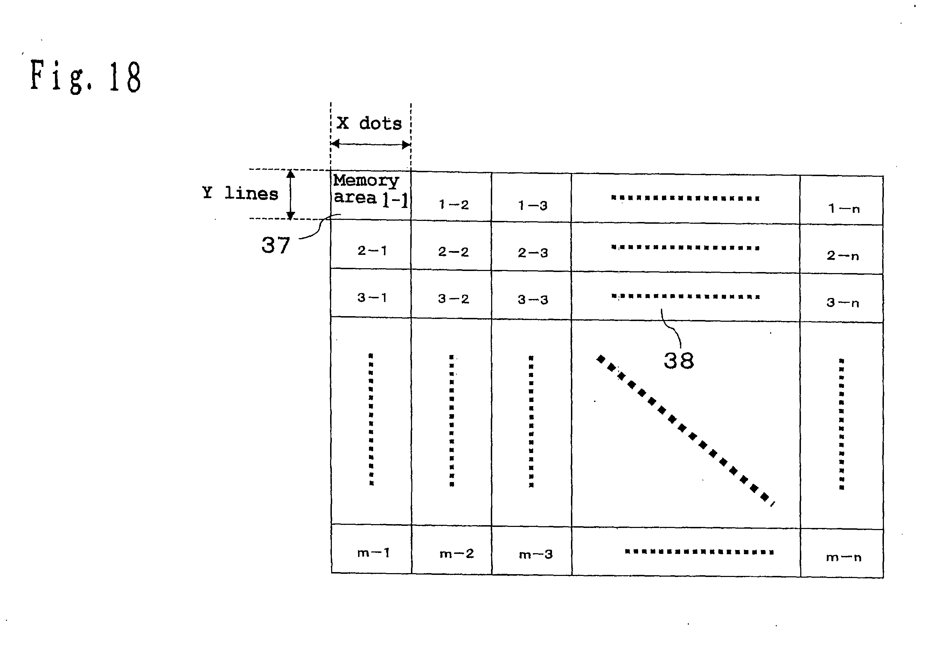

FIG. 17 shows an example of the concrete circuit structure of the part of the buffer memory 2 and the PWM output circuit 3. FIG. 18 shows a concrete example of the image display panel structure corresponding to the circuit structure of FIG. 17. In FIG. 17, RGB video signal data is temporarily stored in a first-stage memory area represented by the part from a memory area 1 to a memory area m. On the image display panel, each memory area corresponds to the display width shown at 38 in FIG. 18.

Then, data is read out from the first-stage memory area, and stored in the second-stage memory area. The second-stage memory area is for storing the video signal data of the X×Y-dot part shown at 37 in FIG. 18 and storing the video signal data of the entire image plane with a number m×n of memories. Such a memory structure is employed in order to reduce the speed of the driving processing, and this is an already widely used method.

The data read out from the second-stage memory is, after one bit is selected by a data selector 39 and the data of one color is selected from R, G and B by a data selector 40, input to the corresponding area of the image display panel 6. The data read out from the second-stage memory is transmitted in time sequence to the pixels of X×Y dots of the image display panel with a gradation bit and timing corresponding to the PWM driving pattern (15 in FIG. 2), and driving is performed, whereby a predetermined PWM driving is realized.

(Second Embodiment)

The second embodiment solves the problem of the insufficient number of display gradations mentioned above.

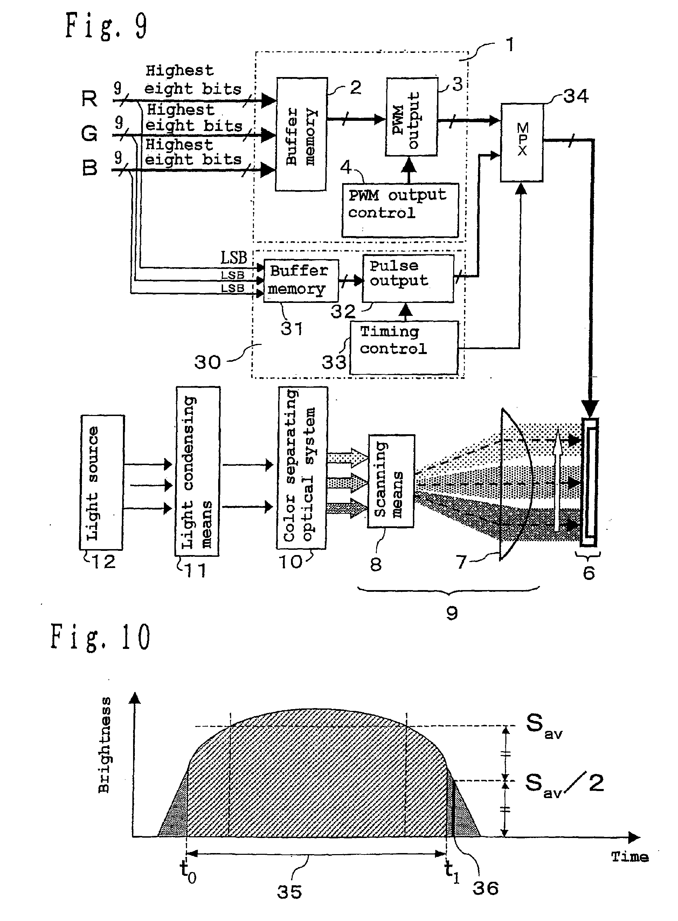

FIGs. 9 and 10 are structural views of the second embodiment. FIG. 9 shows the general structure. FIG. 10 shows the contents of the signal processing.

The structure of FIG. 9 comprises a light source portion 12, light condensing means 11, a color separating optical system 10, an optical system comprising a scanning optical system 9 comprising scanning means 8 and a scanning lens 7, a transmission-type image display panel 6, a PWM driving processing circuit 1 driving the image display panel 6, and a PWM gradation expansion processing circuit 30.

Since the structure of the optical system and the primary PWM driving processing are similar to those of the first embodiment, descriptions thereof are omitted and a PWM gradation expansion processing method will be described.

FIG. 10 shows a relationship between the brightness of the scanning light and time. In FIG. 10, the period 35 from the time t0 to the time t1 is the period used for PWM driving in the first embodiment.

Sav represents the average value of the brightness of the scanning light. The timing 36 when half the average value Sav of the brightness of the scanning light is reached is obtained outside the period from the time t0 to the time t1, and the PWM bitplane is driven by one bit in the entire timing. By using the driving of this part for gradation one bit to be expanded, the display resolution can be expanded by one bit.

Next, a circuit processing embodying the above-described processing will be described with reference to FIGs. 9 and 10. The PWM gradation expansion processing circuit 30 comprises a buffer memory 31, a pulse output circuit 32 and a timing control circuit 33. Assuming that the number of quantization bits of the video signal is nine and the PWM driving is an eight-bit processing, a case where the display resolution is expanded into nine bits will be described. The quantization circuit means of the RGB video signal is not shown in the figures.

The RGB video signal quantized with nine bits has its highest eight bits input to the PWM driving processing circuit 1, and PWM output is performed like in the first embodiment. On the other hand, the lowest quantization bit is input to the PWM gradation expansion processing circuit 30, and input to the buffer memory 31. The idea of the buffer memory is similar to that in the case of the first embodiment, and the data of the lowest bit is temporarily stored in a memory area obtained by dividing the entire image into a number m×n.

The data stored in the memory is read out as a pulse of a width of one bit by the timing control circuit 33 at the timing 36 of FIG. 10 of each of the scanning light beams of R, G and B (pulse output circuit 32), time-division-multiplexed with the PWM driving output signal on the main line by a multiplexer (Mpx) 34, input to the image display panel 6 and driven, so that an image display is obtained.

(Third Embodiment)

The third embodiment achieves both an improvement in brightness and expansion of the display resolution.

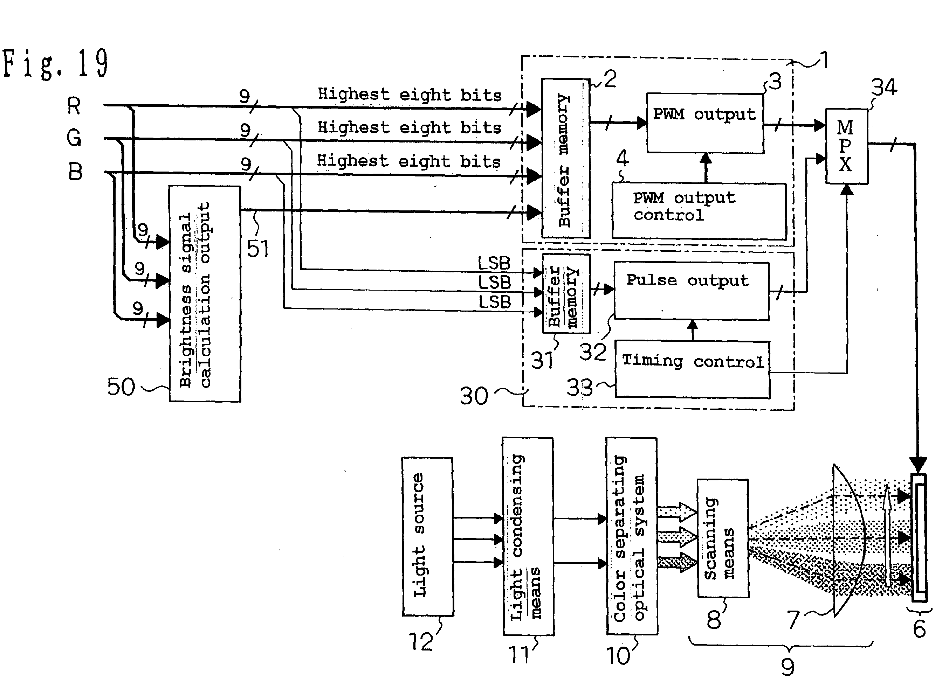

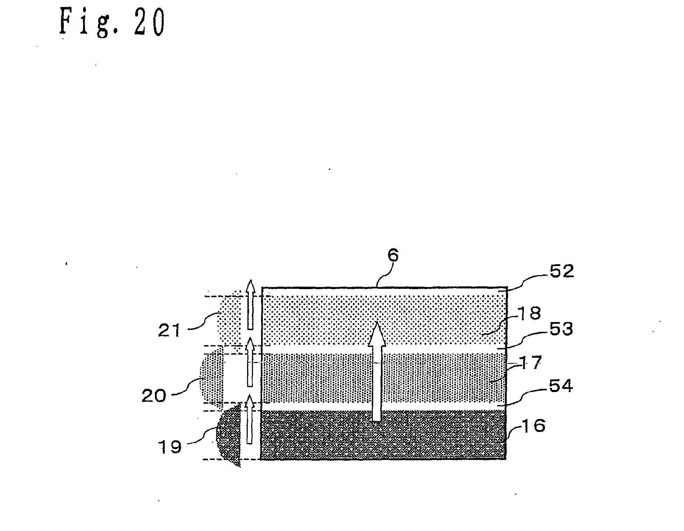

FIG. 19 is a structural view of the third embodiment. FIGs. 20, 21 and 22 show an explanation of the processing method thereof. The structure of FIG. 19 comprises a light source portion 12, light condensing means 11, a color separating optical system 10, an optical system comprising a scanning optical system 9 comprising scanning means 8 and a scanning lens 7, a transmission-type image display panel 6, a PWM driving processing circuit 1 driving the image display panel 6, a PWM gradation expansion processing circuit 30, and a brightness signal calculation output portion 50.

Since the structure of the optical system, the PWM driving processing and the PWM gradation expansion processing are similar to those of the first and the second embodiments, descriptions thereof are omitted and a method of improving the brightness will be described.

FIG. 20 shows the scanning light applied onto the image display panel 6 in the third embodiment. The optical system is adjusted so that the scanning light beams 19, 20 and 21 of R, G and B overlap each other on the borders as shown in the figure. Consequently, mixed color areas 52, 53 and 54 are formed on the borders between the scanning light beams 19, 20 and 21 of R, G and B.

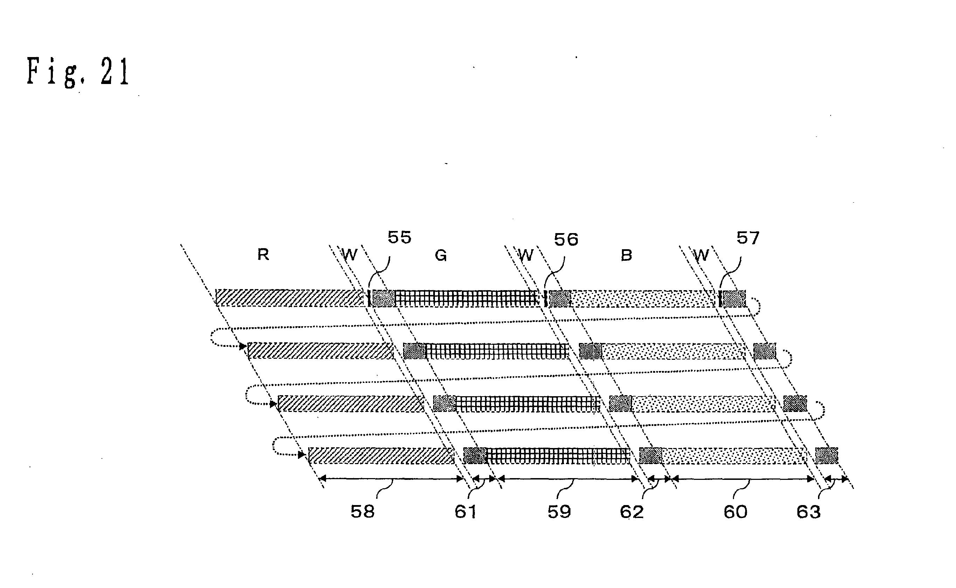

Next, FIG. 21 shows the PWM pattern of the third embodiment. The pattern of FIG. 21 comprises, in addition to repetition parts 58, 59 and 60 of the PWM patterns of the divisional RGB signals described with reference to FIG. 20, PWM patterns 55, 56 and 57 for PWM gradation expansion and PWM patterns always inserted in parts (61, 62 and 63 of FIG. 21) between each RGB PWM pattern.

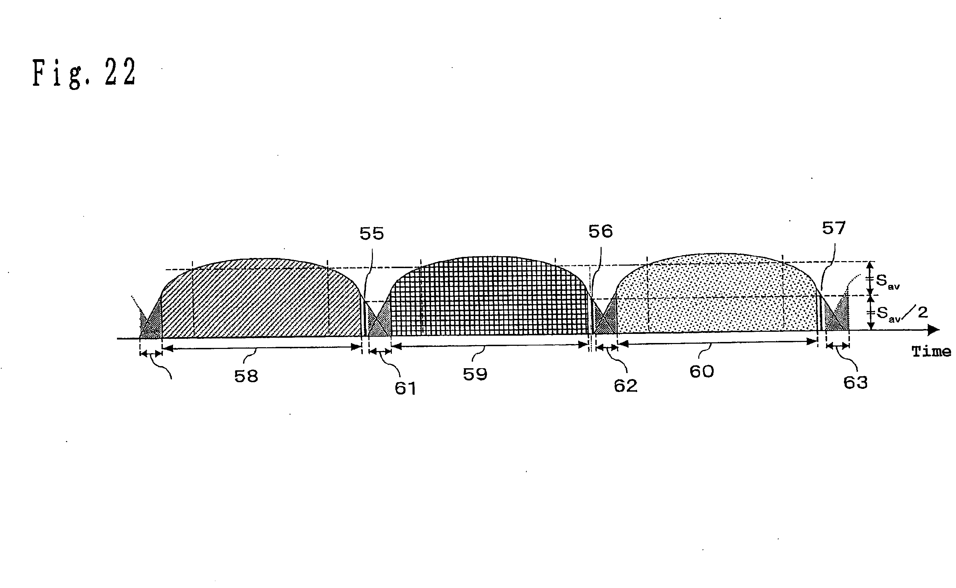

FIG. 22 shows the scanning light beams of R, G and B and the timing of the PWM pattern. As is apparent from FIG. 22, since the R, G and B light beams are equally included when the borders between each of R, G and B (61, 62 and 63 of FIG. 22) are added together, white is synthesized by superimposing these light beams one on another. By using this, the PWM pattern during this period drives the brightness signal component. By this, the brightness can be improved.

Next, a circuit structure enabling the above-described processing method will be described with reference to FIG. 19. The RGB signal data is input to the brightness signal calculation output circuit 50. It is well known that the brightness signal can be synthesized from the RGB signal by a calculation. For example, in the case of NTSC, 0.3R+0.59G+0.11B. Therefore, the brightness signal calculation output circuit 50 comprises a circuit performing a calculation as described above, and outputs brightness signal data 51. The brightness signal data 51 is input to the PWM driving processing circuit 1, a processing similar to that performed on the RGB signal data is performed, and PWM driving of the image display panel 6 is performed.

The present invention is not limited to the scope of the above-described embodiments, and various modifications and variations that can be considered according to the gist of the present invention are not excluded from the scope of the present invention. For example, while the light condensing means 11, the color separating optical system 10 and the scanning optical system 9 are separately described in FIG. 1, a case where these functions are implemented being integrated with one another is also included in the present invention. The present invention is also applicable to a projection-type display using a transmission-type or a reflection-type image display panel. While a case where the PWM pattern of each of R, G and B per frame is divided into four and the RGB time-division driving is repeated four times is shown in FIG. 1, the number of division may be other than four. While a case where the display gradation is increased by one bit is described with reference to FIG. 10, the display gradation can be increased by two or more bits by using a similar idea.

The concrete circuit structure for embodying the PWM driving processing of the present invention, for example, the memory structure and the bus structure for image data input to the image display panel, is not limited to the concrete circuit structures shown in the present invention, but includes all that can implement the driving method of the present invention. For example, while a case where the number of quantization bits of the video signal is eight is described in the first embodiment and a case where the number of quantization bits of the video signal is nine is described in the second embodiment, the number of quantization bits may be arbitrary.

While in the above-described embodiments, the average value of the brightness of the scanning light $\times$ unit time is used as the predetermined value of the incident light quantity for deciding the timing of each display gradation bit of the PWM driving of the present invention, the present invention is not limited thereto; the predetermined value may be a value lower than the average value $\times$ unit time.

INDUSTRIAL APPLICABILITY

As described above, according to the present invention, the following advantageous effects are obtained:

A processing method and an apparatus can be provided that are,
in a light bulb display having an optical system that makes light beams of red, green and blue incident on an image display panel and causes the light beams to continuously move on the image display panel, and performing full-color image display by PWM-driving the image display panel at a timing of light passage,

1) capable of eliminating the discontinuity of display brightness changes with respect to gradation changes,
2) capable of eliminating the unsmoothness of the image or the generation of the false contour caused by the insufficient number of quantization bits of the image, or
3) capable of achieving both an improvement in display brightness and expansion of the number of quantization bits of the image.

**Claims**

1. A display method of a color image display apparatus comprising:

    an image display panel having a multiplicity of pixels capable of modulating incident light in accordance with signals of red, green and blue; an optical system making light beams of red, green and blue incident on said image display panel and causing the light beams to continuously move on said image display panel; and an image display panel driving circuit PWM-driving, in accordance with a color of light incident on a given part of said image display panel, a pixel of the given part with a signal corresponding to the color of the incident light,

    wherein a predetermined value of an incident light quantity and timing when the predetermined value is obtained are previously obtained, and timing of each display gradation bit of PWM driving is set so that display brightness of each display gradation bit n of PWM driving is a product of the predetermined value and $2^n$, and
    wherein image display is performed by using the set timing.

2. A color image display method according to claim 1,
    wherein said predetermined value of the incident light quantity is an average value of brightness of scanning light $\times$ unit time.

3. A color image display apparatus comprising:

    an image display panel having a multiplicity of pixels capable of modulating incident light in accordance with signals of red, green and blue; an optical system making light beams of red, green and blue incident on said image display panel and causing the light beams to continuously move on said image display panel; and an image display panel driving circuit PWM-driving, in accordance with a color of light incident on a given part of said image display panel, a pixel of the given part with a signal corresponding to the color of the incident light,

    wherein a predetermined value of an incident light quantity and timing when the predetermined value is obtained are previously obtained, and timing of each display gradation bit of PWM driving is set so that display brightness of each display gradation bit n of PWM driving is a product of the predetermined value and $2^n$, and
    wherein image display is performed by using the set timing.

4. A display method of a color image display apparatus comprising:

an image display panel having a multiplicity of pixels capable of modulating incident light in accordance with signals of red, green and blue; an optical system making light beams of red, green and blue incident on said image display panel and causing the light beams to continuously move on said image display panel; and an image display panel driving circuit PWM-driving, in accordance with a color of light incident on a given part of said image display panel, a pixel of the given part with a signal corresponding to the color of the incident light,

wherein a PWM pattern is added at a timing when half of a light quantity of the lowest expression bit of PWM driving is possessed, thereby increasing the number of display gradation bits.

5. A color image display apparatus comprising:

an image display panel having a multiplicity of pixels capable of modulating incident light in accordance with signals of red, green and blue; an optical system making light beams of red, green and blue incident on said image display panel and causing the light beams to continuously move on said image display panel; and an image display panel driving circuit PWM-driving, in accordance with a color of light incident on a given part of said image display panel, a pixel of the given part with a signal corresponding to the color of the incident light,

wherein a PWM pattern is added at a timing when a light quantity half the lowest expression bit of PWM driving is possessed, thereby increasing the number of display gradation bits.

6. A display method of a color image display apparatus comprising:

an image display panel having a multiplicity of pixels capable of modulating incident light in accordance with signals of red, green and blue; an optical system making light beams of red, green and blue incident on said image display panel and causing the light beams to continuously move on said image display panel; and an image display panel driving circuit PWM-driving, in accordance with a color of light incident on a given part of said image display panel, a pixel of the given part with a signal corresponding to the color of the incident light,

wherein in said optical system, for the incident light on said image display panel, a period when adjoining two colors overlap each other is provided, and

wherein said image display panel driving circuit drives a brightness signal component during the period when the two signals overlap each other, and adds a PWM pattern at a timing when half of a light quantity of the lowest expression bit of PWM driving is possessed, thereby increasing the number of display gradation bits.

7. A color image display apparatus comprising:

an image display panel having a multiplicity of pixels capable of modulating incident light in accordance with signals of red, green and blue; an optical system making light beams of red, green and blue incident on said image display panel and causing the light beams to continuously move on said image display panel; and an image display panel driving circuit PWM-driving, in accordance with a color of light incident on a given part of said image display panel, a pixel of the given part with a signal corresponding to the color of the incident light,

wherein in said optical system, for the incident light on said image display panel, a period when adjoining two colors overlap each other is provided, and

wherein said image display panel driving circuit drives a brightness signal component during the period when the two signals overlap each other, and adds a PWM pattern at a timing when a light quantity half the lowest expression bit of PWM driving is possessed, thereby increasing the number of display gradation bits.

# Fig. 1

R 8

G 8

B 8

1

Buffer memory

PWM output

PWM output control

2

4

3

Light source

Light condensing means

Color separating optical system

Scanning means

12

11

10

8

7

9

6

Fig. 2

Bit 7
6
5
4
3
2
1
0

13

14

15

Fig. 3

Fig. 4

Fig. 5

Fig. 6 (a)

Fig. 6 (b)

Fig. 6 (c)

Fig. 6 (d)

Fig. 7

EP 1 408 478 A1

Fig. 8

## Fig. 9

R $\overset{9}{\underset{\phantom{9}}{\diagup}}$ Highest eight bits

G $\overset{9}{\underset{\phantom{9}}{\diagup}}$ Highest eight bits

B $\overset{9}{\underset{\phantom{9}}{\diagup}}$ Highest eight bits

Buffer memory — 2

PWM output — 3

PWM output control — 4

MPX — 34

LSB, LSB, LSB

Buffer memory — 31

Pulse output — 32

Timing control — 33

30

1

Light source — 12

Light condensing means — 11

Color separating optical system — 10

Scanning means — 8

7

6

9

## Fig. 10

Brightness

$S_{av}$

$S_{av}/2$

$t_0$      35      $t_1$   36

Time

# Fig. 11

Video input gradation

PWM OFF period

PWM ON period

One frame display period

Time

Fig. 12

R

G

B

t

Fig. 13

R

G

B

t

Fig. 14

Fig. 15

EP 1 408 478 A1

Fig. 16

6

7

44

10

Color separating optical system

Fig. 17

# Fig. 18

| Memory area 1-1 | 1-2 | 1-3 | ■ ■ ■ ■ ■ ■ ■ ■ ■ ■ ■ ■ ■ ■ ■ ■ ■ ■ | 1-n |
| 2-1 | 2-2 | 2-3 | ■ ■ ■ ■ ■ ■ ■ ■ ■ ■ ■ ■ ■ ■ ■ ■ ■ | 2-n |
| 3-1 | 3-2 | 3-3 | ■ ■ ■ ■ ■ ■ ■ ■ ■ ■ ■ ■ ■ ■ ■ ■ ■ | 3-n |
| | | | | |
| m-1 | m-2 | m-3 | ■ ■ ■ ■ ■ ■ ■ ■ ■ ■ ■ ■ ■ ■ ■ | m-n |

X dots

Y lines

37

38

EP 1 408 478 A1

Fig.19

# Fig. 20

Fig. 21

Fig. 22

EP 1 408 478 A1

**INTERNATIONAL SEARCH REPORT**

| International application No. |
|---|
| PCT/JP02/03975 |

| A. CLASSIFICATION OF SUBJECT MATTER |
|---|
| Int.Cl⁷ G09G3/20, G09G3/34, G03B21/00, G03B21/14, G03B33/12, H04N5/66, H04N9/12 |

According to International Patent Classification (IPC) or to both national classification and IPC

| B. FIELDS SEARCHED |
|---|
| Minimum documentation searched (classification system followed by classification symbols) |
| Int.Cl⁷ G09G3/20, G09G3/34, G03B21/00, G03B21/14, G03B33/12, H04N5/66, H04N9/12 |

Documentation searched other than minimum documentation to the extent that such documents are included in the fields searched

| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| P,A | JP 2002-72966 A (Matsushita Electric Industrial Co., Ltd.), 12 March, 2002 (12.03.02), Par. Nos. [0038] to [0058]; Figs. 6 to 9 (Family: none) | 1-7 |
| A | EP 889458 A2 (Sony Corp.), 29 January, 1999 (29.01.99), Column 6, line 1 to column 18, line 28; Figs. 4 to 16 & JP 11-24038 A Par. Nos. [0017] to [0093]; Figs. 1 to 13 & US 6008929 A & CN 1211024 A | 1-3 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 July, 2002 (30.07.02) | 13 August, 2002 (13.08.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

**EP 1 408 478 A1**

## INTERNATIONAL SEARCH REPORT

| International application No. |
|---|
| PCT/JP02/03975 |

| C (Continuation). DOCUMENTS CONSIDERED TO BE RELEVANT |
|---|

| Category* | Citation of document, with indication, where appropriate, of the relevant passages | Relevant to claim No. |
|---|---|---|
| A | JP 6-295159 A (Matsushita Electric Industrial Co., Ltd.), 21 October, 1994 (21.10.94), Par. Nos. [0010] to [0013]; Fig. 1 (Family: none) | 1-7 |

Form PCT/ISA/210 (continuation of second sheet) (July 1998)